# EUROPEAN PATENT SPECIFICATION

(11) **EP 2 070 759 B1**
(45) Date of publication and mention of the grant of the patent: **05.03.2014**
(21) Application number: 07807740.1
(22) Date of filing: 21.09.2007
(51) Int. Cl.: B60L 1/00, B60L 15/42, B60M 1/10, B60M 3/04

(54) **VEHICLE TRACTION CONTROL SYSTEM**
FAHRZEUGFAHRTSTEUERSYSTEM
SYSTÈME DE COMMANDE DE DÉPLACEMENT DE VÉHICULE

(30) Priority: 22.09.2006 JP 2006257291
(43) Date of publication of application: 17.06.2009
(73) Proprietor: Central Japan Railway Company, Nagoya-shi, Aichi 450-6101 (JP)
(72) Inventor: SATO, Kenji, Nagoya-shi Aichi 450-6101 (JP); TANAKA, Hidemitsu, Nagoya-shi Aichi 450-6101 (JP); YOSHIZAWA, Kazuhiro, Nagoya-shi Aichi 450-6101 (JP); WATANABE, Yoshiya, Nagoya-shi Aichi 450-6101 (JP); FUKUSHIMA, Takafumi, Nagoya-shi Aichi 450-6101 (JP); TANIYAMA, Noriyuki, Nagoya-shi Aichi 450-6101 (JP)
(74) Representative: Wilson, Alan Stuart
(86) International application number: PCT/JP2007/068408
(87) International publication number: WO 2008/035768

(56) References cited:
- DE-A1- 4 409 632
- DE-A1- 4 411 845
- JP-A- 9 175 236
- JP-A- 01 060 203
- JP-A- 02 046 105
- JP-A- 10 285 701
- JP-A- 2000 203 316
- JP-A- 2003 009 588
- JP-A- 2005 210 821
- US-A1- 2005 081 736

## Description

### TECHNICAL FIELD

This invention relates to a vehicle traction control system for vehicle control which improves a ride quality of an electric vehicle when the electric vehicle passes a power system switching zone or a changeover section.

### BACKGROUND ART

In a power supply system using alternate current feeding, there is ground equipment (section switching) for switching over the power supplied from different substations. When a vehicle passes the section switching zone, power supply to the vehicle is stopped although for a short period of time.

That is, when a predetermined time elapses after the vehicle enters the section switching zone while power is supplied from one substation, power supply from the substation to the section switching zone is stopped. When a predetermined time elapses after power supply is stopped, power supply is started from another substation to the section switching zone.

Since switching of power supply in the section switching zone is performed in the above-described manner, the power supplied to the vehicle in the section switching zone is changed from a supply state to a stop state, and again to a supply state, for a short period of time. Consequently, torque generated by the traction motor which operates upon receipt of power supply, largely fluctuates in accord with supply and stop of power supply. As a result, a longitudinal shock occurs by which the vehicle is shaken back and forth. A ride quality of the vehicle becomes worse.

Also, when the vehicle enters the section switching zone during application of a power regenerative brake, the power regenerative brake is turned off and a disk brake is turned on instantaneously as power supply is stopped, as in the above torque. That is, since switching on/off of the power regenerative brake and the disk brake instantaneously occurs when the vehicle enters the section switching zone, a longitudinal shock occurs to the vehicle and a ride quality of the vehicle becomes worse.

In order to inhibit such longitudinal shock from occurring in the section switching zone, a section switching technique has been proposed in which the section switching zone is divided into three subzones.

That is, among the three subzones dividing the section switching zone, power is supplied from a different substation to each of the two subzones at both ends, and power is supplied from the both substations to the subzone in the middle. As the vehicle passes each subzone, the substations which supply power to the vehicle are sequentially switched over. In this manner, power is always supplied to the vehicle when the vehicle passes the section switching zone, thereby restricting fluctuations in the traction torque of the vehicle (see Patent Literature 1, for example).
Patent Literature 1: Unexamined Japanese Patent Publication No. 2000-203316

The documents DE 4409632 and DE 4411845 propose to apply predetermined operational characteristics for the power substations to control the train speed JP 09175236 proposes to unit the thrush current during power change overs by using resistors.

### DISCLOSURE OF THE INVENTION

### PROBLEMS TO BE SOLVED BY THE INVENTION

The above feeder switching control device sometimes has not properly operated in the case of a vehicle like a bullet train vehicle which travels at high speed.

That is, in the vehicle like a bullet train which travels at high speed, the travel speed of the vehicle is fast, and generation of high toque is required in order to have the vehicle travel at high speed. Thus, in the bullet train vehicle, it is necessary to precisely grasp the travel position of the bullet train vehicle and timely switch the three power supply subzones when the vehicle passes the section switching zone.

The above feeder switching control device is unable to precisely grasp the travel position of the high speed vehicle like a bullet train. Thus, there are cases in which power supplied to the vehicle is temporarily stopped. As a result, large fluctuations in the traction torque and switching between the power regenerative brake and the disk brake occur on the vehicle side, which causes a longitudinal shock and worsens a ride quality of the vehicle.

The present invention was made in view of the above problem. The object of the present invention is to provide a vehicle traction control system for improving a ride quality of an electric vehicle in a changeover section.

This object is solved by the features of claim 1. The dependent claims recite advantageous embodiments of the invention.

### MEANS TO SOLVE THE PROBLEMS

A first aspect of the present invention, which was made to solve the above problem, provides a vehicle traction control system of an electric vehicle which travels by receiving power supply from a feeder power supply system including a changeover section where power supplied from different power systems is switched over. The vehicle traction control system includes a driving device, a detecting device for detecting a position of a vehicle within a switching zone and a control device.

The driving device receives power supply to drive the vehicle at a predetermined traction torque. The detecting device for detecting a position of a vehicle within a switching zone detects entry of the vehicle into the changeover section.

The control device, when entry of the vehicle into the changeover section is detected by the detecting device for detecting a position of a vehicle within a switching zone, decreases the traction torque generated by the driving device according to a predetermined decreasing pattern during a period from when the vehicle enters the changeover section until when power supply to the changeover section is stopped. When a predetermined power supply resumption time elapses or when the detecting device for detecting a position of a vehicle within a switching zone detects exit of the vehicle from the changeover section, after power supply is stopped, increases the traction torque generated by the driving device according to a predetermined increasing pattern.

In such vehicle traction control system, when entry of the vehicle into the changeover section is detected by the detecting device for detecting a position of a vehicle within a switching zone, the traction torque generated by the driving device is decreased according to a predetermined decreasing pattern during a period from when the vehicle enters the section switching zone until when power supply to the section switching zone is stopped.

Also, when a predetermined power supply resumption time elapses or when the detecting device for detecting a position of a vehicle within a switching zone detects exit of the vehicle from the changeover section, after power supply is stopped, the traction torque is increased according to a predetermined increasing pattern.

In this manner, as the traction torque of the vehicle is controlled after the vehicle enters the changeover section, a ride quality of the vehicle can be improved when the vehicle passes the changeover section. Detailed explanation on this effect will be given.

As described above, when the vehicle passes the changeover section in a state in which the traction torque is generated by the driving device, the traction torque of the driving device rapidly fluctuates due to stop and resumption of power supply. Thus, a longitudinal shock occurs to the vehicle. For example, in the vehicle like a bullet train in which a large traction torque is generated by the driving device in order to achieve high speed travel, the longitudinal shock generated by the fluctuations of the traction torque is large.

Accordingly, if the traction torque is inhibited from rapidly fluctuating in the changeover section by decreasing the traction torque according to a predetermined decreasing pattern until power supply is stopped as well as increasing the traction torque according to a predetermined increasing pattern when power supply is resumed or the vehicle exits from the changeover section as above, then the longitudinal shock no longer occurs to the vehicle. Since a longitudinal shock no longer occurs to the vehicle, a ride quality of the vehicle is improved when the vehicle passes the changeover section.

The same as in the case of the traction torque applies in brakes. That is, as the vehicle enters the section switching zone during application of an electric brake, the electric brake is turned off and a disk brake is turned on instantaneously when power supply is stopped. Accordingly, since switching on/off of the power regenerative brake and the disk brake instantaneously occurs upon entering the section switching zone, a longitudinal shock occurs to the vehicle and a ride quality of the vehicle becomes worse.

Thus, the vehicle traction control system in a second aspect of the present invention preferably includes a mechanical brake for decelerating the vehicle by mechanically inhibiting rotation of wheels of the vehicle and an electric brake for decelerating the vehicle by electrically inhibiting rotation of the wheels of the vehicle. The control device, when entry of the vehicle into the changeover section is detected by the detecting device for detecting a position of a vehicle within a switching zone while the electric brake is applied, may decrease application force of the electric brake according to a predetermined decreasing pattern and increase application force of the mechanical brake according to a predetermined pattern during a period from when the vehicle enters the changeover section until when power supply to the changeover section is stopped. When a predetermined power supply resumption time elapses or when the detecting device for detecting a position of a vehicle within a switching zone detects exit of the vehicle from the changeover section, after power supply is stopped, the control device may increase the application force of the electric brake according to a predetermined increasing pattern and decrease the application force of the mechanical brake according to a predetermined pattern.

The "electric brake" herein is a type of brake which is applied to the vehicle by converting kinetic energy the vehicle has to electric energy. The electric brake means a brake, for example, like a power regenerative brake which makes a driving device operate as a power generator and feeds back the power generated by the power generator to the overhead line.

The "mechanical brake" herein means a brake, for example, like a disk brake which produces braking force by pressing the brake shoe lining against a metal disk attached to the axle.

As described above, in the changeover section, the application force of the electric brake is decreased according to a predetermined decreasing pattern and the application force of the mechanical brake is increased according to a predetermined pattern by the time power supply is stopped. When power supply is resumed or the vehicle moves out of the changeover section, the application force of the electric brake is increased according to a predetermined increasing pattern and the application force of the mechanical brake is decreased according to a predetermined pattern.

In this manner, the application force of the electric brake becomes substantially zero (0) and the application force of the mechanical brake is increased as required before power supply is stopped. Accordingly, even if the electric brake and the mechanical brake are instantaneously switched over when power supply is stopped, there is no change in application force of the brakes as a whole.

If there is no change in application force of the brakes as a whole, no longitudinal shock occurs to the vehicle. A ride quality of the vehicle is improved when the vehicle passes the changeover section.

The time period from when the vehicle enters the changeover section to when power supply is stopped is generally short. Accordingly, in order to reduce the traction torque generated by the driving device in a predetermined decreasing pattern, it is necessary to precisely detect entry of the vehicle into the changeover section on the vehicle side as well.

In the vehicle traction control system of a third aspect of the present invention, the detecting device for detecting a position of a vehicle within a switching zone preferably includes changeover section database which prestores the changeover section information, and an ATC on board device which specifies a current position of the vehicle based on position data of an ATC wayside coil, position data obtained from an induction circuit formed by a track and the vehicle traveling the track, and speed data of the vehicle. When the current position of the vehicle specified by the ATC on board device enters the changeover section stored in the changeover section database, the detecting device for detecting a position of a vehicle within a switching zone may detect entry of the vehicle into the power section switching zone. When the entered vehicle exits from the changeover section, the detecting device for detecting a position of a vehicle within a switching zone may detect exit of the vehicle from the changeover section.

The ATC on board device can precisely detect the current position of the traveling vehicle. Accordingly, as in a third aspect of the present invention, if entry of the vehicle into the changeover section is detected when the current position of the vehicle obtained by the ATC on board device enters the changeover section stored in the changeover section database, and exit of the vehicle from the changeover section is detected when the entered vehicle exits from the changeover section, entry of the vehicle into the changeover section and exit of the vehicle from the changeover section can be precisely detected.

There are various patterns of the traction torque the control device makes the driving device generate when the vehicle passes the changeover section. In the vehicle traction control system of a fourth aspect of the present invention, the traction torque is preferably set to be decreased as time elapses, at a slope of a quotient of a predetermined first traction torque and a predetermined decreasing acceleration value. In this manner, the traction torque is decreased at a constant rate. A constant acceleration (decreasing acceleration) is applied to the vehicle. That is, since fluctuations in acceleration of the vehicle are constant, no adverse effect is given to a ride quality of the vehicle.

In the vehicle control system of a fifth aspect of the present invention, the predetermined increasing pattern of the traction torque the control device makes the driving device generate is preferably set such that the traction torque is preferably increased as time elapses, at a slope of a quotient of a predetermined second traction torque and a predetermined increasing acceleration value. In this manner, the traction torque is increased at a constant rate. A constant acceleration (increasing acceleration) is applied to the vehicle. That is, since fluctuations in acceleration of the vehicle are constant, no adverse effect is given to a ride quality of the vehicle.

In the vehicle traction control system of a sixth aspect of the present invention, both the first traction torque and the second traction torque are set to be a maximum traction torque the driving device can generate. In this way, the vehicle can travel at the maximum traction torque generated by the driving device before and after the vehicle passes the changeover section. The driving device can be used most efficiently.

In the vehicle traction control system of a seventh aspect of the present invention, the control device preferably controls the electric brake and the mechanical brake such that a sum of the application force of the electric brake and the application force of the mechanical brake is constant. In this manner, application force of the brakes as a whole is constant and unchanged even if the electric brake and the mechanical brake are switched over. Therefore, no longitudinal shock occurs to the vehicle. A ride quality of the vehicle is good.

### BRIEF DESCRIPTION OF THE DRAWINGS

FIG. 1 is a block diagram showing a schematic constitution of a vehicle traction control system.
FIG. 2 is a diagram showing section switching operation in a section switching zone.
FIG. 3 is a flowchart of a process executed in a control system 50 of the vehicle traction control system.
FIG. 4 is a diagram showing a relation between the section switching operation and traction control on a vehicle side when the vehicle incorporating the vehicle traction control system passes the section switching zone at a maximum torque.
FIG. 5 is a diagram showing how each value of a section switching zone entry detection signal, an overhead line voltage, and a traction torque is changed when the vehicle incorporating the vehicle traction control system passes the section switching zone at the maximum torque.
FIGS. 6 (a) and (b) are diagrams showing data of measured fluctuations in the actual traction torque when each of the vehicle 80 which incorporates the vehicle traction control system and the vehicle 80 which does not incorporate the vehicle traction control system passes the section switching zone at the maximum torque.
FIG. 7 is a diagram showing a relation between the section switching operation and traction control on a vehicle side when the vehicle incorporating the vehicle traction control system passes the section switching zone with application of brakes.
FIG. 8 is a diagram showing how each value of the section switching zone entry detection signal, the overhead line voltage, and the traction torque is changed when the vehicle incorporating the vehicle traction control system passes the section switching zone with application of brakes.
FIGS. 9 (a) and (b) are diagrams showing data of measured fluctuations in the actual traction torque when each of the vehicle 80 which incorporates the vehicle traction control system and the vehicle 80 which does not incorporate the vehicle traction control system passes the section switching zone with application of brakes.

### EXPLANATION OF REFERENCE NUMERALS

10...driving device, power regenerative brake, 15...disk brake, 20...ATC on board device, 22...ATC wayside coil, 24...external storage device, 24a...changeover section database, 30...speed generator, 40...transmission device, 50...control device, 60...overhead line, 70...pantograph, 80...vehicle, 82...wheel, 90...track.

### BEST MODE FOR CARRYING OUT THE INVENTION

Hereinafter, an embodiment of the present invention will be explained by way of the drawings. An embodiment form of the present invention is not limited to the below-described embodiment in any way, and can take various forms as long as the forms belong to the technical scope of the present invention.

### (Constitution of Vehicle Traction Control System)

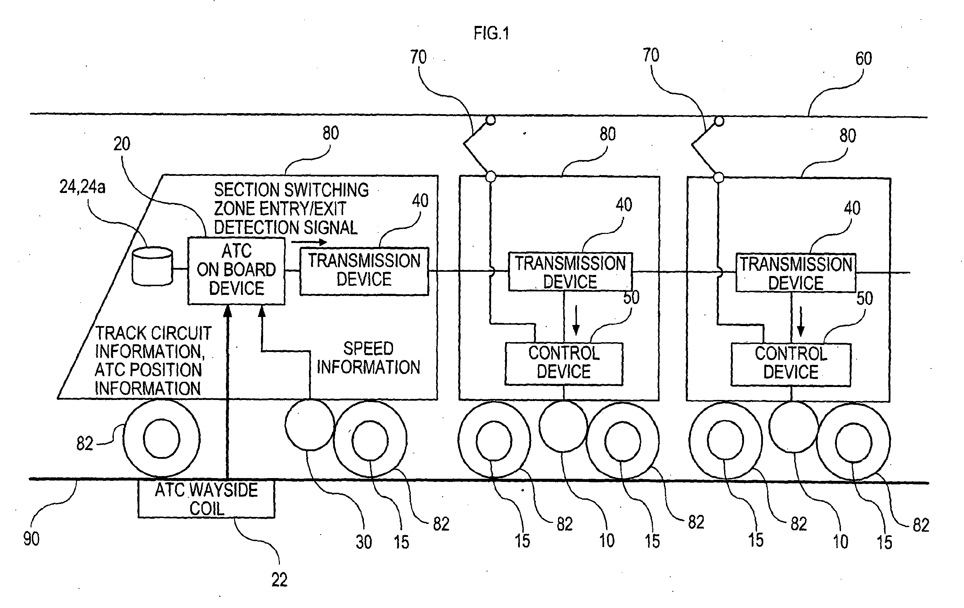

FIG. 1 is a block diagram showing a schematic constitution of a vehicle traction control system. As shown in FIG. 1, the vehicle traction control system is provided with driving devices 10, disk brakes 15, an ATC on board device 20, an ATC wayside coil 22, an external storage device 24 (changeover section database 24a), a speed generator 30, transmission devices 40, and control devices 50.

The driving device 10 receives power from an overhead line 60 via a pantograph 70 and drives wheels 82 at a predetermined traction torque to run the vehicle 80. Particularly, the driving device 10 includes not shown inverter which receives alternate current power from the overhead line 60 via the pantograph 70 and converts the power to direct current once and then to three-phase alternate current. The driving device 10 also includes an alternate-current motor and so on.

The driving device 10 is also used as a power regenerative brake 10 which electrically inhibits rotation of the wheels 82 of the vehicle and thereby decelerates the vehicle. That is, the driving device 10 uses the alternate-current motor as a generator to generate power by the rotation of the wheels 82 of the vehicle, in order to inhibit the rotation of the wheels 82, that is, to apply brakes, by using the generator as a load on the rotation of the wheels 82.

Application force of brakes can be controlled by controlling power generation of the generator. That is, as the power generation is increased, the load is increased and the application force of brakes becomes large. Also, as the power generation is decreased, the load is decreased and the application force of brakes becomes small.

Power generated by the generator is returned to the overhead line 60 via the inverter and the pantograph 70.

The disk brake 15 is a brake which mechanically inhibits rotation of the wheels 82 of the vehicle to decelerate the vehicle. The disk brake 15 inhibits the rotation of the wheels 82, that is, to apply brakes, by forcing the pads against both sides of a disk which is formed by carbon fiber and the like and attached to a not shown axle of each of the wheels 82. The application force of the brake is controlled by how far the brake pads are forced against the disk.

The ATC on board device 20, mounted on the vehicle 80, includes not shown CPU, ROM and RAM, and the external storage device 24. The external storage device 24 of the ATC on board device 20 stores the changeover section database 24a. The changeover section database 24a prestores position data of changeover sections.

The ATC on board device 20 receives position data of the ATC wayside coil 22, position data of the vehicle obtained by an induction circuit formed by a track 90 and the vehicle 80 traveling on the track 90, and speed data of the vehicle 80 obtained by the speed generator 30 for detecting a speed of the vehicle, in order to specify a current position of the vehicle 80.

The ATC on board device 20 also outputs a section switching zone entry detection signal to the control device 50 via the transmission device 40 when the specified current position of the vehicle 80 enters the changeover section stored in the changeover section database 24a, determining that the vehicle 80 has entered the section switching zone.

Moreover, the ATC on board device 20 outputs a section switching zone exit detection signal to the control device 50 via the transmission device 40 when the vehicle 80 exits from the changeover section after the specified vehicle 80 enters the changeover section stored in the changeover section database 24, determining that the vehicle 80 has exited from the section switching zone.

The ATC wayside coil 22 is buried and disposed between two rails of the track 90. When the vehicle passes over the ATC wayside coil 22, the ATC wayside coil 22 transmits the position data of the ATC wayside coil 22 to the ATC on board device 20.

The speed generator 30 detects the speed of the vehicle 80. The speed generator 30 generates a voltage proportional to the speed of the vehicle 80 in order to detect the speed of the vehicle 80.

The transmission device 40 is a device for transmitting the section switching zone entry detection signal and the section switching zone exit detection signal outputted from the ATC on board device 20 to the control device 50. Particularly, the transmission device 40 converts, and transmit, the section switching zone entry detection signal and the section switching zone exit detection signal outputted from the ATC on board device 20 into a signal form transmittable to the transmission device 40 on the control device 50 side under noise environment, etc. For example, input/output of the transmission device 40 is configured to use RS-232C or RS-422 standard so as to transmit and receive the detection signals.

The control device 50 includes not shown CPU, ROM, RAM, and so on. The control device 50, when receiving the section switching zone detection signal from the ATC on board device 20, decreases the traction torque generated by the driving device 10 according to a predetermined decreasing pattern from when the vehicle 80 enters the section switching zone to when power supply to the section switching zone is stopped. When a predetermined power supply resumption time elapses or the section switching zone entry detection signal is received, after power supply is stopped, the control device increases the traction torque generated by the driving device 10 according to a predetermined increasing pattern.

### (Section Switching Operation in Section Switching Zone)

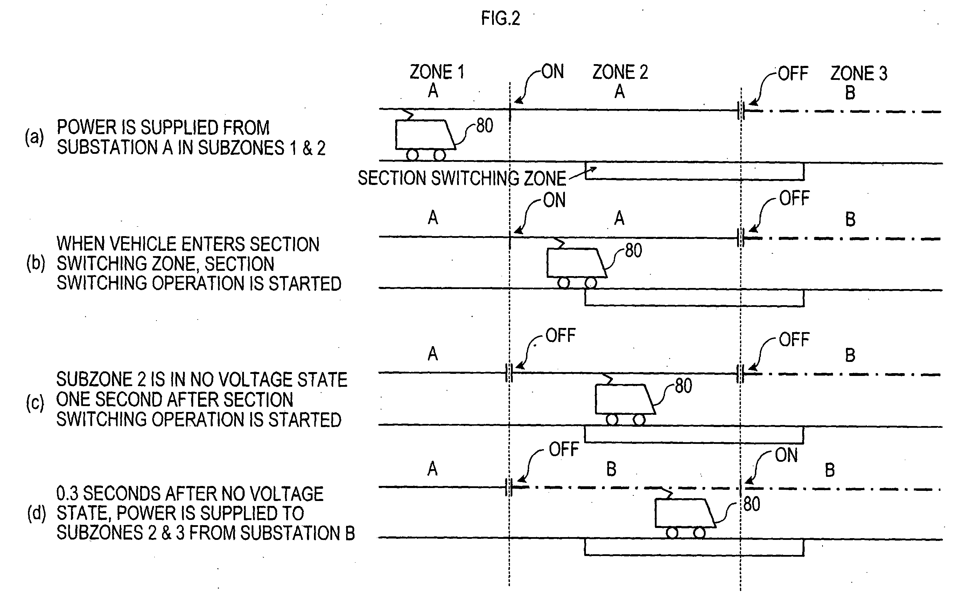

Section switching operation in the section switching zone will be explained by way of FIG. 2. FIG. 2 is a diagram showing section switching operation in a section switching zone.

As shown in FIG. 2(a), in a subzone 1 before entering the section switching zone, the vehicle 80 receives power from a substation A to travel.

When the vehicle 80 moves and enters the section switching zone as shown in FIG. 2(b), the section switching operation is started.

When the section switching operation is started, power supply to a subzone 2 is stopped one second after the vehicle 80 enters the section switching zone, as shown in FIG. 2(c). Thereby, the subzone 2 is in a no voltage state.

Then, as shown in FIG. 2(d), 0.3 seconds after power supply is stopped, power is supplied to the subzone 2 from a substation B. Power supply to the vehicle 80 is resumed.

Since the section switching operation is executed as above, there is an event in which power is not supplied to the vehicle 80 for 0.3 seconds in the subzone 2. On this occasion, the traction torque rapidly fluctuates and thus a longitudinal shock occurs.

### (Traction Control Process)

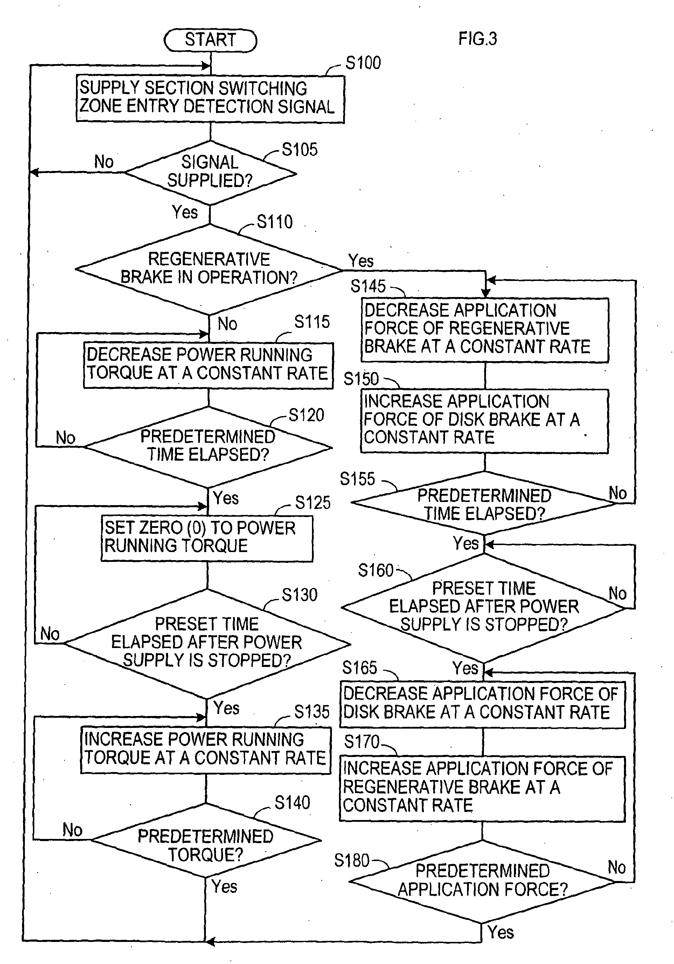

Now, a traction control process executed by the control device 50 after the vehicle 80 enters the section switching zone will be explained based on a flowchart in FIG. 3. FIG. 3 is a flowchart of a process executed in the control system 50 of the vehicle traction control system.

As shown in FIG. 3, the section switching zone entry detection signal is supplied from the ATC on board device 20 in S100.

In subsequent S105, it is determined whether or not the section switching zone entry detection signal is supplied. If it is determined that the section switching zone entry detection signal is not supplied (S105: No), the process returns to S100. The supply process of the section switching zone entry detection signal from the ATC on board device 20 is repeated. On the other hand, if it is determined that the section switching zone entry detection signal is supplied (S105: Yes), the process moves to S110.

In S110, it is determined whether or not the driving device 10 is operated as the power regenerative brake 10. When it is determined that the power regenerative brake 10 is in operation (S110: Yes), the process moves to S145. If it is determined that the power regenerative brake 10 is not in operation (S110: No), the process moves to S115.

In S115, the traction torque is decreased at a constant rate. In subsequent S120, it is determined whether or not a predetermined time has elapsed. In the present embodiment, the predetermined time is one second (see FIG. 2). If the predetermined time (one second) has not elapsed (S120: No), the process returns to S115 and the traction torque is decreased until the predetermined time elapses. When the predetermined time has elapsed (S120: Yes), the process moves to S125.

In S125 and S130, a preset time and traction torque are set to zero (0). In the case of the present embodiment, the preset time is 0.3 seconds (see FIG. 2).

When the preset time (0.3 seconds) has elapsed after the traction torque is set to zero (0), the traction torque is increased at a constant rate in S135. In subsequent S140, it is determined whether or not the predetermined traction torque is achieved.

When the predetermined traction torque is not achieved (S140: No), the process returns to S135 and the traction torque is increased. On the other hand, when the predetermined traction torque is achieved (S140: Yes), the process returns to S100 to repeat the traction control process.

When it is determined in S110 that the power regenerative brake 10 is in operation and the process moves to S145, application force of the power regenerative brake 10 is decreased at a constant rate in S145. In subsequent S150, application force of the disk brake 15 is increased at a constant rate.

When the application force of the power regenerative brake 10 is decreased in S145 and the application force of the disk brake 15 is increased in S150, the power regenerative brake 10 and the disk brake 15 are controlled such that a sum of the application force of the power regenerative brake 10 and the application force of the disk brake 15 is constant.

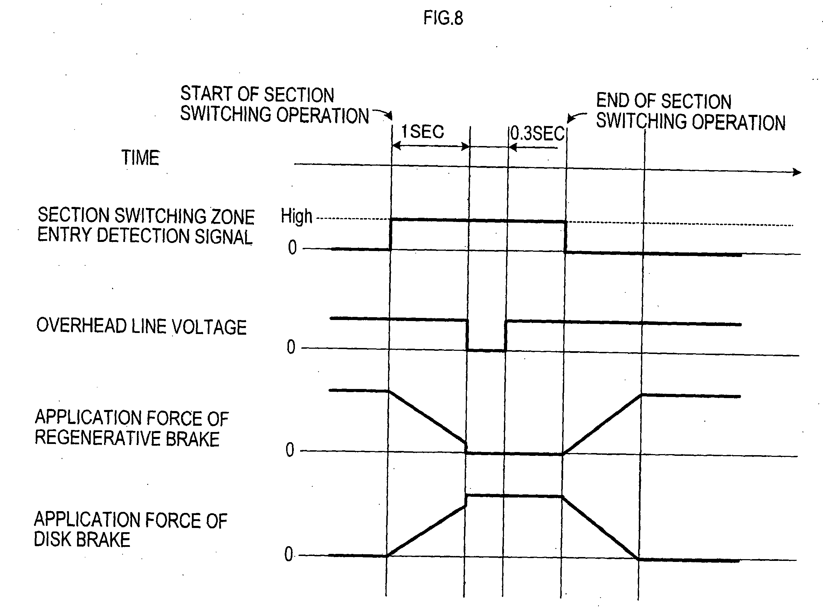

In subsequent S155, it is determined whether a predetermined time has elapsed. In the present embodiment, the predetermined time is set to one second (see FIG. 8). If the predetermined time (one second) has not yet elapsed (S155: No), the process returns to S145. Until the predetermined time elapses, the application forces of the power regenerative brake 10 and the disk brake 15 are controlled. After the predetermined time has elapsed (S155: Yes), the process moves to S160.

In S160, it is determined whether or not the preset time has elapsed after power supply is stopped. If the preset time has not elapsed (S160: No), the step of S160 is repeated until the preset time elapses. When the preset time has elapsed (S160: Yes), the process moves to S165.

In S165, the application force of the disk brake 15 is decreased at a constant rate. In subsequent S170, the application force of the power regenerative brake 10 is increased at a constant rate.

When the application force of the disk brake 15 is decreased at a constant rate in S165 and the application force of the power regenerative brake 10 is increased at a constant rate in S170, the disk brake 10 and the power regenerative brake 15 are controlled such that a sum of the application force of the disk brake 15 and the application force of the power regenerative brake 10 is constant.

In subsequent S180, it is determined whether or not the application force of the power regenerative brake 10 has reached a predetermined value. If the application force has not reached the predetermined value (S180: No), the process returns to S165. The application force is controlled until the application force reaches the predetermined value. When the application force has reached the predetermined value (S180: Yes), the process returns to S100, and the traction control process is repeated.

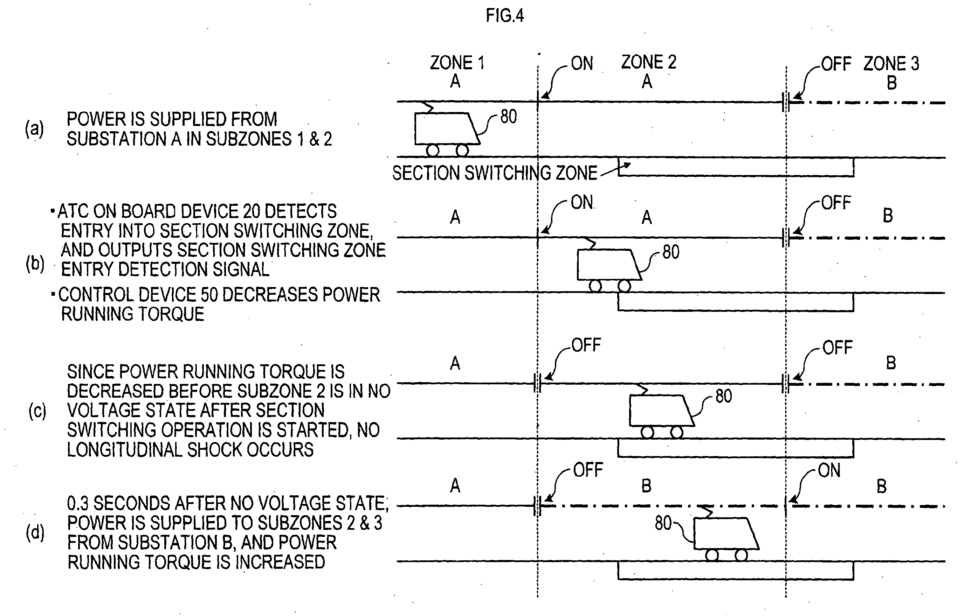

A relation will now be explained, by way of FIG. 4, between the section switching operation and traction control on a vehicle side when the vehicle 80 incorporating the above-described vehicle control system passes the section switching zone at a maximum torque.

As shown in FIG. 4(a), in the subzone 1 before entering the section switching zone, the vehicle 80 receives power from the substation A and travels at a maximum traction torque the driving device 10 can generate.

When the vehicle 80 moves and enters the section switching zone as shown in FIG. 4(b), section switching operation is started. At this point, it is detected, on the vehicle 80 side, that the ATC on board device 20 has entered the section switching zone. Then, the section switching zone entry detection signal is supplied to the control system 50 from the ATC on board device 20, and the traction torque is started to decrease at a constant rate.

A decreasing pattern of the traction torque at this moment is such that the traction torque is decreased from the maximum traction torque to zero (0) in proportion to elapsed time, at a slope of a quotient (constant value) of the maximum traction torque the driving device 10 can generate and a predetermined decreasing rate.

Subsequently, as shown in FIG. 4(c), power supply to the subzone 2 is stopped one second after the vehicle 80 enters the section switching zone. At this point, the traction torque is set to zero (0) on the vehicle 80 side.

Then, as shown in FIG. 4(d), 0.3 seconds after power supply from the substation A is stopped, power is supplied to the subzone 2 from the substation B. At this point, the traction torque is increased at a constant rate on the vehicle 80 side until the traction torque reaches the predetermined value.

A increasing pattern of the traction torque at this moment is such that the traction torque is increased from zero (0) to the maximum traction torque in proportion to elapsed time, at a slope of a quotient (constant value) of the maximum traction torque the driving device 10 can generate and a predetermined increasing rate.

As noted above, the traction torque is smoothly decreased and increased on the vehicle 80 side in response to the section switching operation. Thus, even though there is an event in which power is not supplied to the vehicle 80 for 0.3 seconds in the subzone 2, the traction torque does not rapidly fluctuate. Since the traction torque does not rapidly fluctuate, a longitudinal shock does not occur.

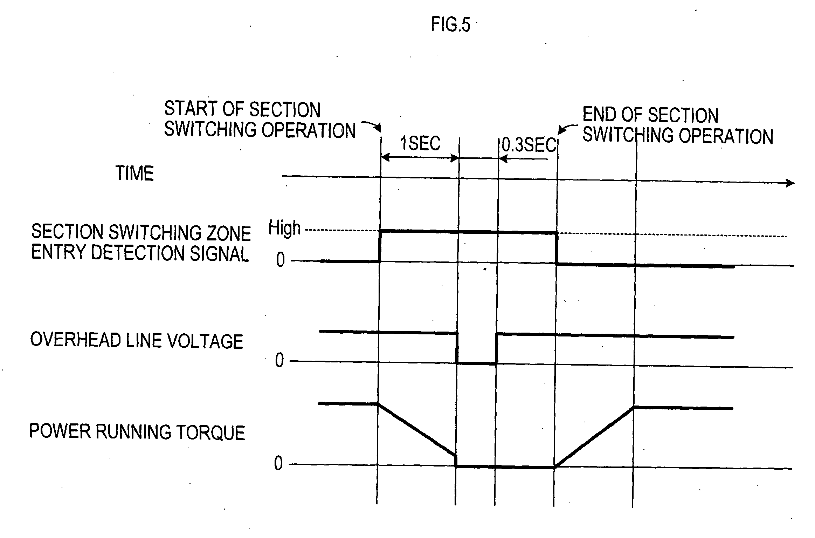

FIG. 5 shows how each value of the section switching zone entry detection signal, an overhead line voltage, and the traction torque is changed when traction control is performed as shown in FIG. 4.

As shown in FIG. 5, when the vehicle 80 enters the section switching zone and the section switching operation is started, the section switching zone entry detection signal turns to High. As a result, the traction torque is started to decrease at a constant rate.

One second after the section switching operation is started, the overhead line voltage is changed from 25,000 [V] to 0 [V]. At this moment, the traction torque is already decreased to near zero (0). Thus, the traction torque hardly fluctuates, even though power is no longer supplied to the driving device 10 because the overhead line voltage becomes 0 [V] and the traction torque the driving device 10 can generate becomes zero (0). Since there are small fluctuations in the traction torque, a longitudinal shock caused by the fluctuations in the traction torque does not occur to the vehicle 80.

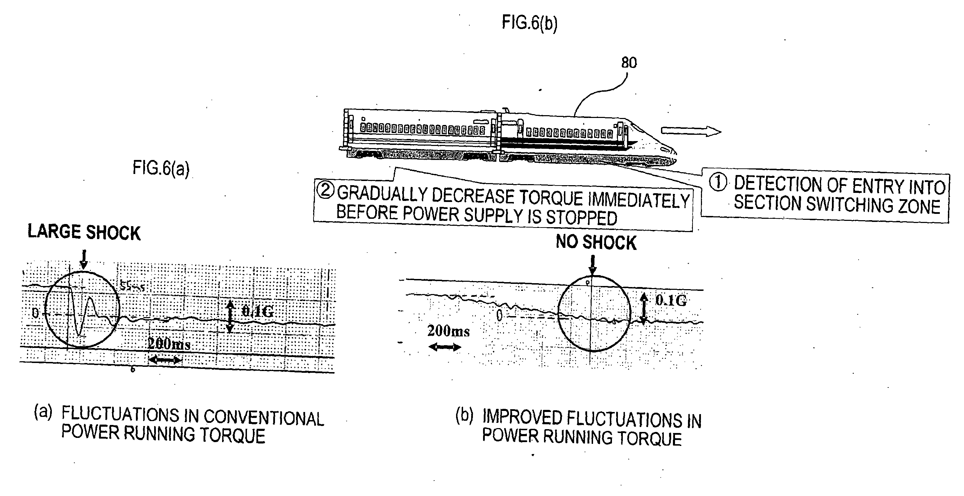

FIGS. 6(a) and (b) show data of measured fluctuations in the actual traction torque when each of the vehicle 80 which incorporates the vehicle traction control system and the vehicle 80 which does not incorporate the vehicle traction control system passes the section switching zone. FIG. 6(a) shows fluctuations in the traction torque in a conventional vehicle before incorporating the vehicle traction control system. FIG. 6(b) shows fluctuations in the traction torque in the vehicle 80 incorporating the vehicle traction control system, which is improved so as not to cause a longitudinal shock. In FIGS. 6(a) and (b), the horizontal axis indicates time and the vertical axis indicates longitudinal acceleration.

As shown in FIG. 6(a), longitudinal acceleration when the vehicle passes the section switching zone rapidly fluctuates, in the conventional vehicle. It can be seen that a longitudinal shock is occurring to the vehicle. On the other hand, in the vehicle 80 incorporating the vehicle traction control system, longitudinal acceleration when the vehicle 80 passes the section switching zone smoothly fluctuates, as shown in FIG. 6(b). It can be seen that there is no longitudinal shock occurring to the vehicle 80.

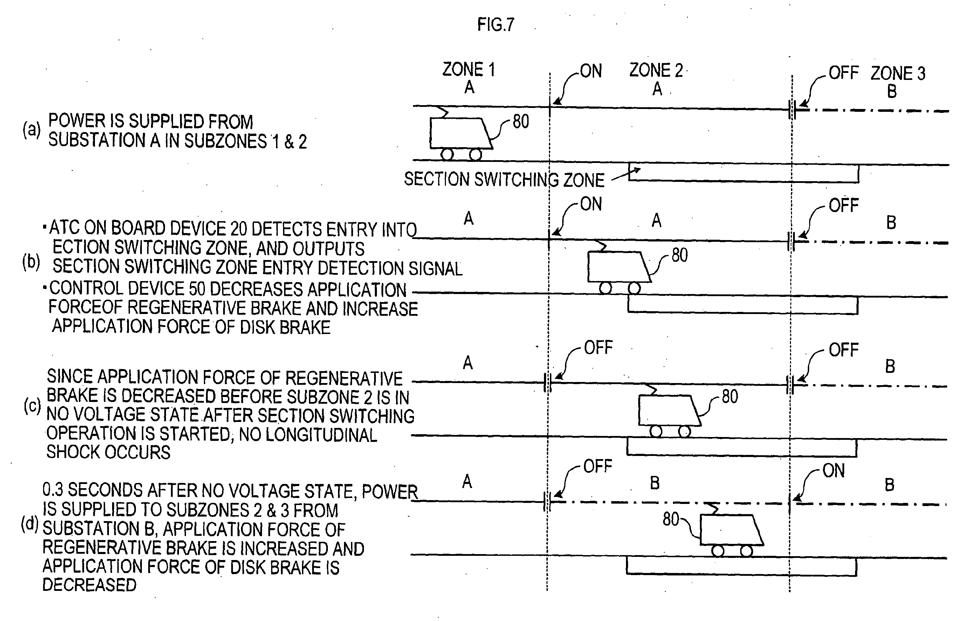

A relation will be explained, by way of FIG. 7, between the section switching operation and traction control on the vehicle side when the vehicle 80 incorporating the vehicle traction control system passes the section switching zone with application of brakes.

As shown in FIG. 7(a), the vehicle 80 travels with application of the power regenerative brake 10 in the subzone 1 before entering the section switching zone.

When the vehicle 80 moves and enters the section switching zone as shown in FIG. 7(b), the section switching operation is started. At this point, on the vehicle 80 side, the ATC on board device 20 detects entry of the vehicle 80 into the section switching zone. Then, the section switching zone entry detection signal is supplied to the control device 50 from the ATC on board device 20. As a result, the application force of the power regenerative brake 10 is started to decrease at a constant rate and the application force of the disk brake 15 is started to increase at a constant rate.

Subsequently, as shown in FIG. 7(c), one second after the vehicle 80 enters the section switching zone, power supply to the subzone 2 is stopped.

Then, as shown in FIG. 7(d), 0.3 seconds after power supply is stopped, power is supplied to the subzone 2 from the substation B. At this point, on the vehicle 80 side, the application force of the power regenerative brake 10 is increased at a constant rate to a predetermined value, and the application force of the disk brake 15 is decreased at a constant rate.

As noted above, the application forces of the power regenerative brake 10 and the disk brake 15 are smoothly decreased and increased on the vehicle 80 side in response to the section switching operation. Thus, even though there is an event in which power is not supplied to the vehicle 80 for 0.3 seconds in the subzone 2, the application forces of the brakes do not rapidly fluctuate. Since the application forces of the brakes do not rapidly fluctuate, a longitudinal shock does not occur.

FIG. 8 shows how each value of the section switching zone entry detection signal, the overhead line voltage, the application force of the power regenerative brake 10 and the application force of the disk brake is changed when traction control is performed as shown in FIG. 7.

As shown in FIG. 8, when the vehicle 80 enters the section switching zone and the section switching operation is started, the section switching zone entry detection signal turns to High. As a result, the application force of the power regenerative brake 10 is started to decrease at a constant rate and the application force of the disk brake 15 is started to increase at a constant rate.

One second after the section switching operation is started, the overhead line voltage is changed from 25,000 [V] to 0 [V]. At this moment, the application force of the power regenerative brake 10 is already decreased to near zero (0) and the application force of the disk brake 15 has reached a rated value. Thus, the application forces of the brakes hardly fluctuate, even though the power regenerative brake 10 is no longer applied because the overhead line voltage becomes 0 [V] and the application force the power regenerative brake 10 can generate becomes zero (0). Since there are small fluctuations in the application forces of the brakes, a longitudinal shock caused by the fluctuations in the application forces of the brakes does not occur to the vehicle 80.

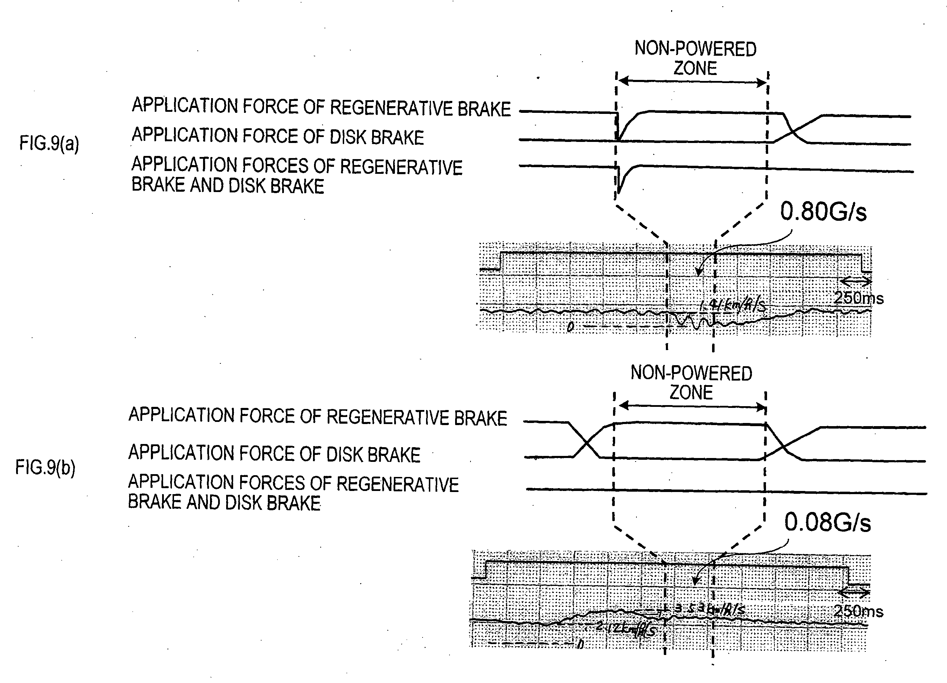

FIGS. 9(a) and (b) show data of measured actual fluctuations (accelerations) when each of the vehicle 80 which incorporates the vehicle traction control system and the vehicle 80 which does not incorporate the vehicle traction control system passes the section switching zone. FIG. 9(a) shows fluctuations (accelerations) in a conventional vehicle before incorporating the vehicle traction control system in case the section switching operation is performed upon application of brakes. FIG. 9(b) shows fluctuations (accelerations) in the vehicle 80 incorporating the vehicle traction control system, which is improved so as not to cause a longitudinal shock. In FIGS. 9(a) and (b), the horizontal axis indicates time and the vertical axis indicates longitudinal acceleration.

In the conventional vehicle as shown in FIG. 9(a), longitudinal acceleration when the vehicle passes the section switching zone rapidly fluctuates to an extent of 0.80 G/s. It can be seen that a longitudinal shock is occurring to the vehicle. On the other hand, in the vehicle 80 incorporating the vehicle traction control system, longitudinal acceleration when the vehicle 80 passes the section switching zone smoothly fluctuates to an extent of 0.08 G/s, as shown in FIG. 9(b). It can be seen that a longitudinal shock occurring to the vehicle 80 is greatly reduced as compared to the case in the conventional vehicle.

As described above, in the vehicle traction control system, in case that the vehicle 80 travels in a state where the traction torque is generated, the traction torque is decreased according to a predetermined decreasing pattern until power supply is stopped and the traction torque is increased according to a predetermined increasing pattern when power supply is resumed in the changeover section, so that the traction torque is inhibited from rapidly fluctuating. Accordingly, a longitudinal shock does not occur to the vehicle 80. Since the longitudinal shock does not occur to the vehicle 80, a ride quality of the vehicle 80 is improved upon passing the changeover section.

Also, in a state where the power regenerative brake 10 is applied, the application force of the power regenerative brake 10 is decreased according to a predetermined decreasing pattern and the application force of the disk brake 15 is increased according to a predetermined increasing pattern until power supply is stopped in the section switching zone. When power supply is resumed, the application force of the power regenerative brake 10 is increased according to a predetermined increasing pattern and the application force of the disk brake 15 is decreased according to a predetermined decreasing pattern, so that the application forces of brakes are inhibited from rapidly fluctuating. Accordingly, a longitudinal shock does not occur to the vehicle 80. Since the longitudinal shock does not occur to the vehicle 80, a ride quality of the vehicle 80 is improved upon passing the section switching zone.

In the vehicle traction control system, a current position of the traveling vehicle 80 is obtained by using the ATC on board device 20. Since the ATC on board device 20 can precisely detect the current position of the traveling vehicle, entry of the vehicle 80 into the section switching zone and exit of the vehicle 80 from the section switching zone can be precisely detected.

The decreasing pattern of the traction torque generated by the driving device 10 is set such that the traction torque is decreased at a constant rate. Thus, constant acceleration (decreasing acceleration) is applied to the vehicle 80. That is, since fluctuations in acceleration of the vehicle 80 are constant, no longitudinal shock occurs to the vehicle 80. No adverse effect is given to a ride quality of the vehicle.

The increasing pattern of the traction torque generated by the driving device 10 is set such that the traction torque is increased at a constant rate. Thus, constant acceleration (increasing acceleration) is applied to the vehicle 80. That is, since fluctuations in acceleration of the vehicle 80 are constant, no longitudinal shock occurs to the vehicle 80. No adverse effect is given to a ride quality of the vehicle.

Upon decreasing the traction torque, the traction torque is decreased from the maximum torque that can be generated by the driving device 10. Upon increasing the traction torque, the traction torque is increased from zero (0) to the maximum torque. Accordingly, the vehicle 80 can travel at the maximum traction torque generated by the driving device 10 before and after the vehicle 80 passes the changeover section. Accordingly, the driving device 10 can be most efficiently used.

Also, the power regenerative brake and the disk brake 15 are controlled such that a sum of the application force of the power regenerative brake 10 and the application force of the disk brake 15 is constant. The application force of the brakes as a whole is constant and unchanged even if the power regenerative brake 10 and the disk brake 15 are switched over. Therefore, no longitudinal shock occurs to the vehicle. A ride quality of the vehicle is comfortable.

### (Other Embodiments)

The embodiment of the present invention is described in the above. However, the present invention is not limited to the present embodiment and can take various modes.
(1) In the present embodiment, the traction torque is decreased or increased at a constant rate with respect to the elapsed time. However, other patterns may be adopted. For example, the traction torque may be decreased in a curved pattern. , That is, when the section switching zone entry detection signal is received, the traction torque is decreased at a large rate, and immediately before power supply from the overhead line is stopped, the decreasing rate is reduced (vice versa in case that the traction torque is increased).
(2) In the present embodiment, when the traction torque is decreased to zero (0) and the preset time (0.3 seconds) has passed after power supply is stopped, the traction torque is increased (see S125 to S140 in FIG. 3). However, the traction torque may be increased when the vehicle 80 exits from the section switching zone after power is down.

Particularly, in the traction control process shown in the flowchart of FIG. 3, after the traction torque is set to zero (0) in S125, a new step of S127 is added in which a section switching zone exit signal is supplied. In subsequent S130, instead of determining whether or not the predetermined time has elapsed after power supply is stopped, it is determined whether or not the section switching zone exit signal is supplied.

When the section switching zone exit signal is supplied (S130: Yes), the process moves to S135 and the traction torque is increased. On the other hand, when the section switching zone exit signal is not supplied (S130: No), the process returns to S125 and the torque is kept to be zero (0).

## Claims

1. A vehicle traction control system of an electric vehicle (80) which travels by receiving power supply from a feeder power supply system including a changeover section where power supplied from different power systems is switched over, the vehicle traction control system comprising:
a driving device (10) that receives power supply to drive the vehicle (80) with a predetermined traction torque;
a detecting device for detecting a position of a vehicle within a switching zone that detects entry of the vehicle into the changeover section and exit of the vehicle from the changeover section; **characterised in that** the traction control system further comprises
a control device (50) which on entry of the vehicle into the changeover section decreases the traction torque generated by the driving device (10) according to a predetermined decreasing pattern during a period from when the vehicle (80) enters the section switching zone until when power supply to the section switching zone is stopped, and, when a predetermined power supply resumption time elapses or when the detecting device detects exit of the vehicle (80) from the changeover section, after power supply is stopped, increases the traction torque generated by the driving device (10) according to a predetermined increasing pattern.

2. The vehicle traction control system according to claim 1 further comprising:
a mechanical brake for decelerating the vehicle (80) by mechanically inhibiting rotation of wheels (82) of the vehicle and
an electric brake for decelerating the vehicle (80) by electrically inhibiting rotation of the wheels (82) of the vehicle, wherein
when entry of the vehicle (80) into the changeover section is detected by the detecting device while the electric brake is applied, the control device (50) decreases application force of the electric brake according to a predetermined decreasing pattern and increases application force of the mechanical brake according to a predetermined pattern during a period from when the vehicle (80) enters the changeover section until when power supply to the changeover section is stopped, and, when a predetermined power supply resumption time elapses or when the detecting device detects exit of the vehicle (80) from the changeover section, after power supply is stopped, increases the application force of the electric brake according to a predetermined increasing pattern and decreases the application force of the mechanical brake according to a predetermined pattern.

3. The vehicle traction control system set forth in claim 1 wherein
the detecting device includes:
a changeover section database (24a) which prestores the changeover section information; and
an ATC on board device (20) which specifies a current position of the vehicle (80) based on position data of an ATC wayside coil, position data of the vehicle obtained from an induction circuit formed by a track and the vehicle traveling the track, and speed data of the vehicle obtained by a speed detecting device for detecting a speed of the vehicle (80), wherein,
when the current position of the vehicle specified by the ATC on board device (20) enters the changeover section stored in the changeover section database, the detecting device detects entry of the vehicle (80) into the power section switching zone, and, when the entered vehicle (80) exits from the changeover section, the detecting device for detecting a position of a vehicle (80) within a switching zone detects exit of the vehicle (80) from the changeover section.

4. The vehicle traction control system set forth in claim 1 wherein
the predetermined decreasing pattern of the traction torque that the control device makes the driving device (10) generate is such that the traction torque is decreased as time elapses, at a slope of a quotient of a predetermined first traction torque and a predetermined decreasing acceleration value.

5. The vehicle traction control system set forth in claim 1 wherein
the predetermined increasing pattern of the traction torque that the control device (50) makes the driving device (10) generate is such that the traction torque is increased as time elapses, at a slope of a quotient of a predetermined second traction torque and a predetermined increasing acceleration value.

6. The vehicle traction control system set forth in claim 5 wherein
the second traction torque is set to be a maximum traction torque that the driving device (10) can generate.

7. The vehicle traction control system set forth in claim 2 wherein
the control device (50) controls the electric brake and the mechanical brake such that a sum of the application force of the electric brake and the application force of the mechanical brake is constant.

8. The vehicle traction control system set forth in claim 4 wherein
the first traction torque is set to be a maximum traction torque that the driving device (10) can generate.

## Patentansprüche

1. Ein Fahrzeugantriebssteuersystem eines elektrischen Fahrzeugs (80), das durch Aufnahme von Stromzufuhr von einem Stromzufuhrsystem, einschließlich eines Schaltabschnitts, wo auf Stromzufuhr von anderen Stromsystemen umgeschaltet wird, fährt, wobei das Fahrzeugfahrsteuersystem aus Folgenden besteht:
einem Antrieb (10), der die Stromzufuhr zum Antrieb des Fahrzeugs (80) mit einem vorbestimmten Schleppmoment aufnimmt;
einem Detektor zur Feststellung einer Position eines Fahrzeugs innerhalb einer Schaltzone, der das Einfahren des Fahrzeug in den Schaltbereich und das Ausfahren des Fahrzeugs aus dem Schaltbereich feststellt; **dadurch gekennzeichnet, dass** das Antriebssteuersystem zudem folgendes umfasst:
eine Steuervorrichtung (50), die beim Einfahren des Fahrzeugs in den Schaltbereich das vom Antrieb (10) erzeugte Schleppmoment entsprechend einem vorbestimmten abnehmendem Muster während eines Zeitraum vom Augenblick, wenn das Fahrzeug (80) in den Schaltbereichsabschnitt einfährt, bis zu dem Augenblick, wenn die Stromzufuhr zum Schaltbereichsabschnitt stoppt, senkt, und, wenn ein vorbestimmter Zeitraum zur Stromwiederaufnahme abläuft oder wenn der der Detektor feststellt, dass das Fahrzeug (80) aus dem Schaltbereich herausfährt, nachdem die Stromzufuhr gestoppt wurde, das Schleppmoment, das vom Antrieb (10) erzeugt wird, nach einem vorbestimmten, ansteigenden Muster erhöht.

2. Das Fahrzeugantriebssteuersystem entsprechend Anspruch 1, zu dem weiterhin Folgendes gehört:
eine mechanische Bremse zur Verlangsamung des Fahrzeugs (80), indem sie die Rotation von Rädern (82) des Fahrzeugs mechanisch verhindert, und
eine elektrische Bremse zur Verlangsamung des Fahrzeugs (80), indem sie die Rotation von Rädern (82) des Fahrzeugs elektrisch verhindert, wobei
wenn der Detektor feststellt, dass das Fahrzeug (80) in den Schaltbereich bei angelegter elektrischer Bremse festgestellt wird, die Steuerung (50) während einem Zeitraum ab Einfahren des Fahrzeugs (80) in den Schaltbereich bis zum Stoppen der Stromzufuhr zum Schaltbereich die angewandte Kraft der elektrischen Bremse entsprechend einem vorbestimmten abnehmenden Muster senkt und die angewandte Kraft der mechanischen Bremse entsprechend einem vorbestimmten Muster erhöht, und wenn ein vorbestimmter Zeitraum zur Stromwiederaufnahme abläuft oder wenn der der Detektor feststellt, dass das Fahrzeug (80) aus dem Schaltbereich herausfährt, nachdem die Stromzufuhr gestoppt wurde, die angewandte Kraft der elektrischen Bremse entsprechend einem vorbestimmten ansteigenden Muster erhöht und die angewandte Kraft der mechanischen Bremse nach einem vorbestimmten Muster senkt.

3. Das Fahrzeugantriebssteuersystem entsprechend Anspruch 1, wobei der Detektor Folgendes umfasst:
eine Schaltbereichsdatenbank (24a), in der die Schaltbereichsinformation vorgespeichert ist; und
ein ATC-Bordgerät (20), welches die aktuelle Position des Fahrzeugs (80) basierend auf Positionsdaten einer ATC-Streckenspule, Positionsdaten des Fahrzeugs, die von einem Induktionskreis, der von einer Schiene und dem auf der Schiene fahrenden Fahrzeug gebildet wird, erhalten werden, sowie Geschwindigkeitsdaten des Fahrzeug, die von einem Geschwindigkeitsmesser zur Feststellen einer Geschwindigkeit des Fahrzeugs (80) erhalten werden, spezifiziert; wobei
wenn die aktuelle, vom STC-Bordgerät (20) spezifizierte Position des Fahrzeug den in der Schaltbereichsdatenbank gespeicherten Schaltbereich erreicht, der Detektor das Einfahren des Fahrzeugs (80) in den Stromschaltbereich feststellt und, wenn das eingefahrene Fahrzeug (80) aus dem Schaltbereich herausfährt, der Detektor zur Feststellung der Position eines Fahrzeugs (80) innerhalb eines Schaltbereichs das Herausfahren des Fahrzeugs (80) aus dem Schaltbereich feststellt.

4. Das Fahrzeugantriebssteuersystem entsprechend Anspruch 1, wobei das vorbestimmte abnehmende Muster des Schleppmoments, dessen Erzeugung durch den Antrieb (10) von der Steuerung veranlasst wird, so bestimmt ist, dass das Schleppmoment bei Zeitablauf bei der Steigung eines Quotienten eines vorbestimmten ersten Schleppmoments und eines vorbestimmten abnehmenden Beschleunigungswert gesenkt wird.

5. Das Fahrzeugantriebssteuersystem entsprechend Anspruch 1, wobei das vorbestimmte zunehmende Muster des Schleppmoments, dessen Erzeugung durch den Antrieb (10) von der Steuerung veranlasst wird, so bestimmt ist, dass das Schleppmoment bei Zeitablauf bei der Steigung eines Quotienten eines vorbestimmten ersten Schleppmoments und eines vorbestimmten abnehmenden Beschleunigungswert erhöht wird.

6. Das Fahrzeugantriebssteuersystem entsprechend Anspruch 5, wobei das zweite Schleppmoment auf ein maximales Schleppmoment einstellt ist, das der Antrieb (10) erzeugen kann.

7. Das Fahrzeugantriebssteuersystem entsprechend Anspruch 2, wobei die Steuerung (50) die elektrische Bremse und die mechanische Bremse so kontrolliert, dass eine Summe der angewandten Kraft der elektrischen Bremse und der angewandten Kraft der mechanischen Bremse konstant ist.

8. Das Fahrzeugantriebssteuersystem entsprechend Anspruch 4, wobei das erste Schleppmoment auf ein maximales Schleppmoment einstellt ist, das der Antrieb (10) erzeugen kann.

## Revendications

1. Un système de commande de traction de véhicule d'un véhicule électrique (80) qui se déplace en recevant une alimentation électrique provenant d'un système d'alimentation électrique d'alimentation comprenant une section de commutation dans laquelle du courant fourni à partir de différents systèmes électriques est commuté, le système de commande de traction de véhicule comprenant :
un dispositif d'entraînement (10) qui reçoit une alimentation électrique destinée à entraîner le véhicule (80) avec un couple de traction prédéterminé,
un dispositif de détection destiné à détecter une position d'un véhicule à l'intérieur d'une zone de commutation qui détecte l'entrée du véhicule dans la section de commutation et la sortie du véhicule de la section de commutation, **caractérisé en ce que** le système de commande de traction comprend en outre
un dispositif de commande (50) qui, au moment de l'entrée du véhicule dans la section de commutation, diminue le couple de traction généré par le dispositif d'entraînement (10) selon un modèle décroissant prédéterminé au cours d'une période allant du moment où le véhicule (80) entre dans la zone de commutation de section jusqu'au moment où une alimentation électrique de la zone de commutation de section est arrêtée, et, lorsqu'un temps de reprise d'alimentation électrique prédéterminé s'est écoulé ou lorsque le dispositif de détection détecte la sortie du véhicule (80) de la section de commutation, après qu'une alimentation électrique ait été arrêtée, augmente le couple de traction généré par le dispositif d'entraînement (10) selon un modèle croissant prédéterminé.

2. Le système de commande de traction de véhicule selon la Revendication 1 comprenant en outre :
un frein mécanique destiné à décélérer le véhicule (80) par l'inhibition mécanique de la rotation des roues (82) du véhicule, et
un frein électrique destiné à décélérer le véhicule (80) par l'inhibition électrique de la rotation des roues (82) du véhicule, où
lorsque l'entrée du véhicule (80) dans la section de commutation est détectée par le dispositif de détection alors que le frein électrique est appliqué, le dispositif de commande (50) diminue la force d'application du frein électrique selon un modèle décroissant prédéterminé et augmente la force d'application du frein mécanique selon un modèle prédéterminé au cours d'une période allant du moment où le véhicule (80) entre dans la section de commutation jusqu'au moment où une alimentation électrique de la section de commutation est arrêtée, et, lorsqu'un temps de reprise d'alimentation électrique prédéterminé s'est écoulé ou lorsque le dispositif de détection détecte la sortie du véhicule (80) de la section de commutation, après qu'une alimentation électrique ait été arrêtée, augmente la force d'application du frein électrique selon un modèle croissant prédéterminé et diminue la force d'application du frein mécanique selon un modèle prédéterminé.

3. Le système de commande de traction de véhicule selon la Revendication 1 où le dispositif de détection comprend :
une base de données de section de commutation (24a) qui pré-conserve en mémoire les informations de section de commutation, et
un dispositif embarqué ATC (20) qui spécifie une position actuelle du véhicule (80) en fonction de données de position d'une bobine en bordure de voie ATC, de données de position du véhicule obtenues à partir d'un circuit d'induction formé par une voie et le véhicule circulant sur la voie, et de données de vitesse du véhicule obtenues par un dispositif de détection de vitesse destiné à détecter une vitesse du véhicule (80), où,
lorsque la position actuelle du véhicule spécifiée par le dispositif embarqué ATC (20) entre dans la section de commutation conservée en mémoire dans la base de données de section de commutation, le dispositif de détection détecte l'entrée du véhicule (80) dans la zone de commutation de section électrique, et, lorsque le véhicule entré (80) sort de la section de commutation, le dispositif de détection destiné à détecter une position d'un véhicule (80) à l'intérieur d'une zone de commutation détecte la sortie du véhicule (80) de la section de commutation.

4. Le système de commande de traction de véhicule selon la Revendication 1 où
le modèle décroissant prédéterminé du couple de traction que le dispositif de commande fait générer par le dispositif d'entraînement (10) est tel que le couple de traction est diminué à mesure que le temps s'écoule, à une pente d'un quotient d'un premier couple de traction prédéterminé et à une valeur d'accélération décroissante prédéterminée.

5. Le système de commande de traction de véhicule selon la Revendication 1 où
le modèle croissant prédéterminé du couple de traction que le dispositif de commande (50) fait générer par le dispositif d'entraînement (10) est tel que le couple de traction est augmenté à mesure que le temps s'écoule, à une pente d'un quotient d'un deuxième couple de traction prédéterminé et à une valeur d'accélération croissante prédéterminée.

6. Le système de commande de traction de véhicule selon la Revendication 5 où
le deuxième couple de traction est défini de façon à être un couple de traction maximal que le dispositif d'entraînement (10) est capable de générer.

7. Le système de commande de traction de véhicule selon la Revendication 2 où
le dispositif de commande (50) commande le frein électrique et le frein mécanique de sorte qu'une somme de la force d'application du frein électrique et de la force d'application du frein mécanique soit constante.

8. Le système de commande de traction de véhicule selon la Revendication 4 où
le premier couple de traction est défini de façon à être un couple de traction maximal que le dispositif d'entraînement (10) est capable de générer.
